# EUROPEAN PATENT SPECIFICATION

(11) **EP 4 477 896 B1**
(45) Date of publication and mention of the grant of the patent: **19.11.2025**
(21) Application number: 24020194.7
(22) Date of filing: 11.06.2024
(51) Int. Cl.: F16B 13/06

(54) **EXPANSION ANCHOR**
SPREIZANKER
ANCRE EXTENSIBLE

(30) Priority: 12.06.2023 PL 44519123
(43) Date of publication of application: 18.12.2024
(73) Proprietor: Koelner Rawlplug IP Spólka z ograniczona odpowiedzialnoscia, 51-416 Wroclaw (PL)
(72) Inventor: FILIP, Piotr, 37-100 Lancut (PL); OSETEK, Miroslaw, 36-060 Glogow Malopolski (PL); DZIEDZIC, Krzysztof, 35-242 Rzeszow (PL); PLIZGA, Kazimierz, 37-126 Medynia Glogowska (PL); MAGON, Zenon, 37-121 Husow (PL); PIECHUTA, Robert, 37-111 Rakszawa (PL)
(74) Representative: Sleczka, Joanna

(56) References cited:
- DE-A1- 3 528 744
- DE-A1- 3 601 597

## Description

The object of the application is an expanding anchor for fastening in a hole drilled in concrete.

From the description of application DE3601597A1 there is known a device for fastening an object on a ceiling or the like by plug-through mounting using an externally threaded bolt. On one end of the bolt there can be screwed a nut, and on the other, partially cylindrical and partially conical end, whose greatest diameter is not more than equal to the diameter of the bolt, there is displaceably retained a single-piece expansion sleeve which is open on one circumferential region and, on the diametrically opposite circumferential region, is provided over part of its length with a longitudinal slot. The expansion sleeve has a toothing or coupling region and an expandable extension region which adjoins said toothing region in one piece in the axial direction and is provided with a longitudinal slot, that on the open circumferential region is provided with the toothing region, on the mutually opposite sides of longitudinal edges, wherein in each case there is at least one integrally formed lug, said lugs engaging one beside the other and projecting outwards preferably tangentially, and the extension region, whose length is approximately the same as that of the conical region of the externally threaded bolt, is provided with at least one cutout which facilitates subsequent expansion.

From the description of application WO2005093265A1 there is also known an expanding anchor. The invention relates to an expanding anchor having an expanding sleeve that can be expanded by drawing in an expanding cone. The expanding sleeve is provided with zigzag-shaped or wave-shaped notches, so that expanding elements formed by these notches mesh with one another. As a result, the expanding sleeve, even when expanded, rests against a borehole wall while extending over the entire periphery.

The abovementioned anchoring devices which are known from prior art do not enable independent movement of connecting elements along the longitudinal axis of the expanding sleeve. When the diameter of a hole in concrete is increased in size due to the formation of a crack in the concrete, and the subsequent shrinkage of this crack, it is impossible to arrange segments of the expanding sleeve in a nonparallel manner, due to which the sleeve adjusts itself worse to the newly created hole space, and by moving angularly in the hole, it loosens the fastening of the anchoring device as well as the element being fastened. Moreover, when the crack in concrete shrinks, it is impossible for the segments of the expanding sleeve to come together to a parallel position. This may result in sheet metal exceeding its plasticity and cracking, causing disintegration of the expanding sleeve, and thus loosening of the fastened object, or even releasing the anchoring device. In known solutions, there is also the problem of the inability of the expanding sleeve to move axially, which would allow for an increase in the contact area of the sleeve segments.

The purpose of the invention is to overcome at least one of the above disadvantages and propose an improved expanding anchor which would hold a fastened object even when a crack is formed in concrete in the area of the mounting hole, or in the case of worse concrete grades or nonuniformness of the concrete structure.

The expanding anchor for fastening in a hole drilled in concrete according to the invention is formed of a threaded bolt ending with a cone whose smaller diameter is facing the threaded part, the bolt having placed thereon an expanding sleeve formed of expanding segments divided by longitudinal slots and provided with lugs, which protrude beyond the diameter of the expanding sleeve, wherein an element fastening an object is seated on the threaded part of the bolt. The expanding anchor is characterised in that one continuous longitudinal slot of the expanding sleeve is formed from the side of the element fastening the object, by the edges of the expanding segments, the edges having an extension in a longitudinal axial and circumferential direction of the threaded bolt, which extension resembles a trapezium, and subsequently, the edges in the longitudinal axial direction of the threaded bolt turn into straight lines converging near the end of the expanding sleeve, and the length h of the edges from the base of the expanding sleeve from the side of the element fastening the object to the end of the trapezium part <= half of the length H of the expanding sleeve, whereas the ratio of the lengths A1 and B1 of the parts of the edges extending in the longitudinal axial direction of the threaded bolt in the trapezium part is A1 <= B1, and the ratio of the heights A2 and B2 of the trapezia formed by the edges in the trapezium part of the expanding sleeve is A2 >= B2, whereas on the circumference of the expanding sleeve there are distributed lugs, which have the form of individual elements situated in two rows, and of an annular collar, while additional longitudinal slots end with holes which divide the expanding sleeve into separate expanding segments. A lug in the form of an annular collar is placed near the edge of the expanding sleeve, from the side of the cone. Lugs having the form of individual elements and forming a first row are distributed on the circumference of the expanding sleeve and situated behind the lug in the form of an annular collar. Lugs having the form of individual elements and forming a second row are distributed on the circumference of the expanding sleeve and situated near the edge of the expanding sleeve from the side of the element fastening the object. The lugs forming the first row have a height W higher than the height Z of the lugs forming the second row.

The expanding anchor for fastening in a hole drilled in concrete according to the invention is characterised by simple design, and at the same time high functionality. This has been achieved by forming one continuous longitudinal slot on the expanding sleeve by the edges of the expanding segments forming the expanding sleeve, these edges having an extension in a longitudinal axial and circumferential direction of the threaded bolt, and the extension thereof resembling a trapezium from the side of the element fastening the object. Moreover, in the longitudinal axial direction of the threaded bolt, these edges turn into straight lines converging near the end of the expanding sleeve. Such design and proper ratios of the lengths of the edges of the expanding segments forming the slot, and the heights of the trapezia formed by the edges of the expanding segments in the area resembling a trapezium, cause the formation of a "lock" for the expanding segments forming the expanding sleeve, which along with the area where the edges converge prevents a skewed, and therefore asymmetrical arrangement of the expanding segments forming the expanding sleeve during the step of fastening the anchor, as well as incomplete closure of these segments, and the placement of the expanding sleeve in an inverted position on the threaded bolt. Moreover, during the step of fastening the anchor in a mounting hole in concrete, such design also provides a uniform arrangement of individual expanding segments of the expanding sleeve in the hole, and prevents the rupture of the expanding sleeve during its positioning. During a further step of fastening the expanding anchor in the hole, after applying a torque, such design causes the threaded bolt of the expanding sleeve to slide onto the cone in a uniform manner, with a controlled plane of friction. On the other hand, following the application of a longitudinal force during attempts to pull out the anchor, in the final phase, the closed "lock" formed by the edges of the expanding segments along with the lugs prevents the anchor from sliding out, stabilising the work of the expanding sleeve both in uncracked concrete and when the concrete cracks in the hole. When such a crack occurs in concrete in the hole, resulting in an increase in the diameter of the hole where the expanding anchor is fastened, the expanding segments forming the expanding sleeve move, causing expansion of the expanding sleeve in the hole. During expansion of the expanding sleeve, because the edges of the expanding segments forming the expanding sleeve have the shape of a trapezium, and therefore form a "lock" in the shape of a trapezium, the expanding segments may expand in a nonparallel manner, due to which the expanding sleeve as well as the expanding anchor fit more precisely into the newly formed hole space. On the other hand, when the crack formed in concrete in the hole closes, due to the formation of a "lock" in the shape of a trapezium and its placement from the side of the element fastening the object, the expanding segments move, and the expanding sleeve is forced to return to the initial setting, meaning a parallel arrangement of the expanding segments, and therefore the threaded bolt is drawn in, resulting in the elimination of play between the fastened element and a washer with a nut. Such design of the expanding anchor causes reliability of fastening regardless of the structure of concrete. Moreover, independent work of the expanding segments contributes to the fact that the expanding sleeve does not rupture, and the distribution of stresses in concrete is uniform. Because of this, the expanding anchor may work for a very long time, both under constant and variable working conditions of concrete, when cracks form and close in the concrete. Proper situation of the lugs on the expanding sleeve as well as their shape protect the anchor against the sliding of the expanding sleeve in the hole during the action of longitudinal forces, and they support the work of the "lock" of the expanding sleeve when a crack is formed, shrinks and expands in concrete. During an attempt to directly pull out the expanding anchor anchored in concrete (in the literature known as the pull-out test), the "lock" formed on the expanding sleeve along with the lugs prevents the anchor from being pulled out, resulting in the effect of pulling out a shape of concrete resembling a cone along with the expanding anchor, which is a desirable image of destruction indicating that the weakest element of the anchoring system is not the expanding anchor, but the layer in which it is fastened, in this case concrete.

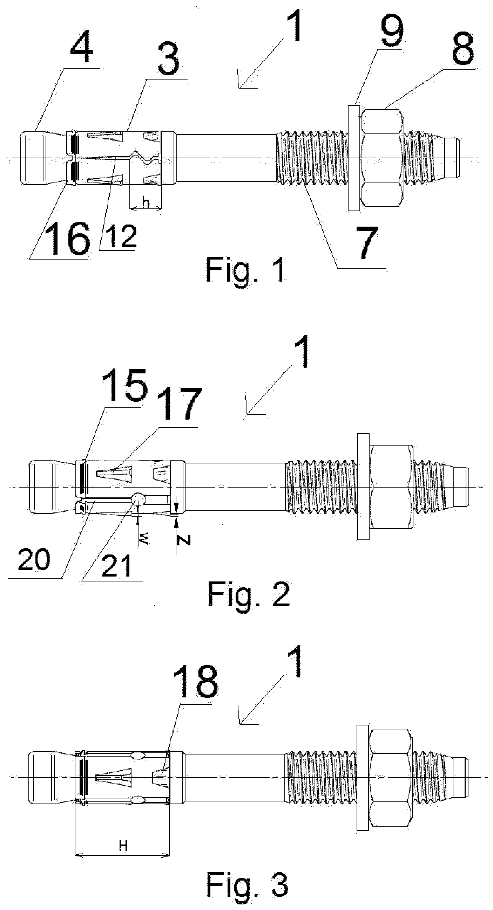

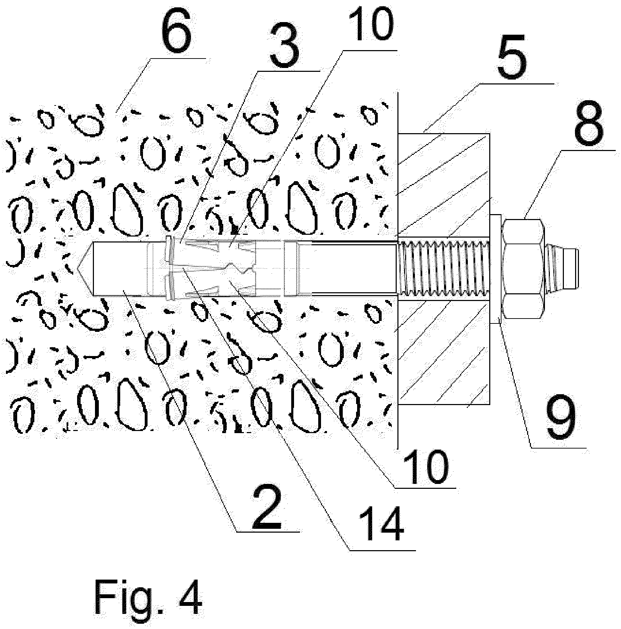

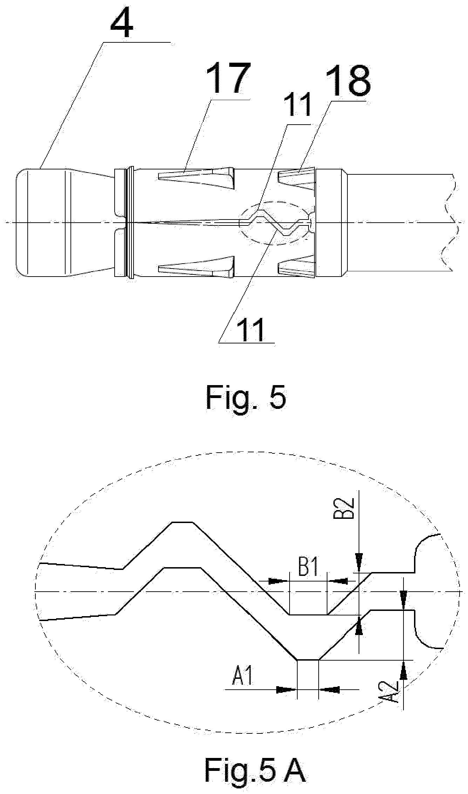

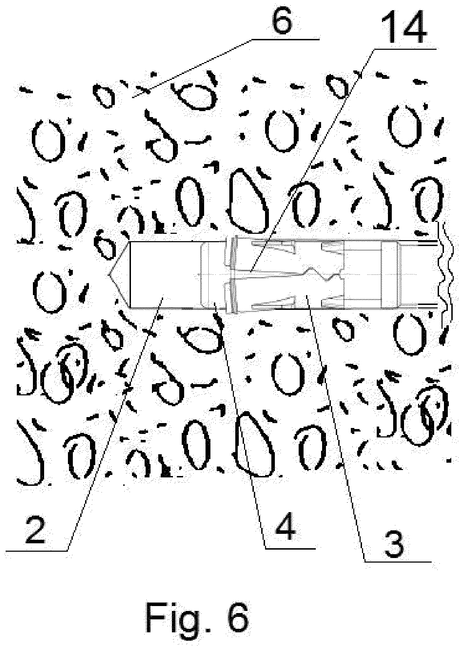

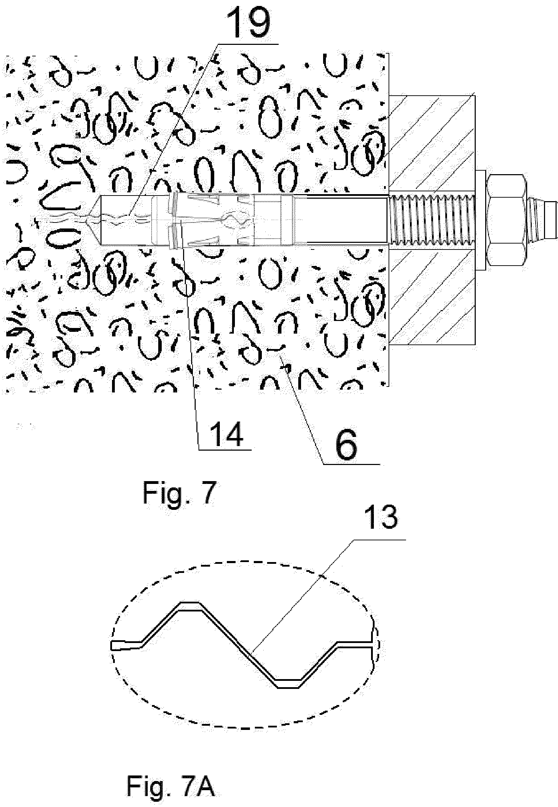

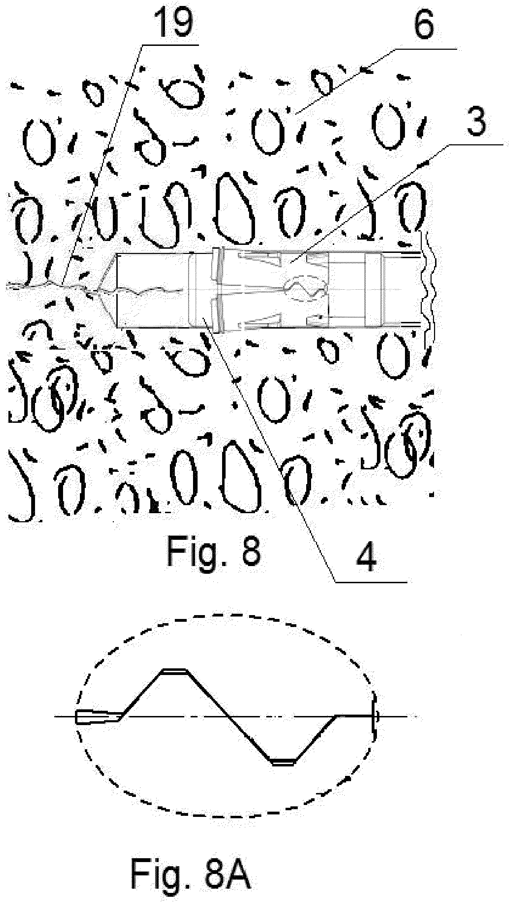

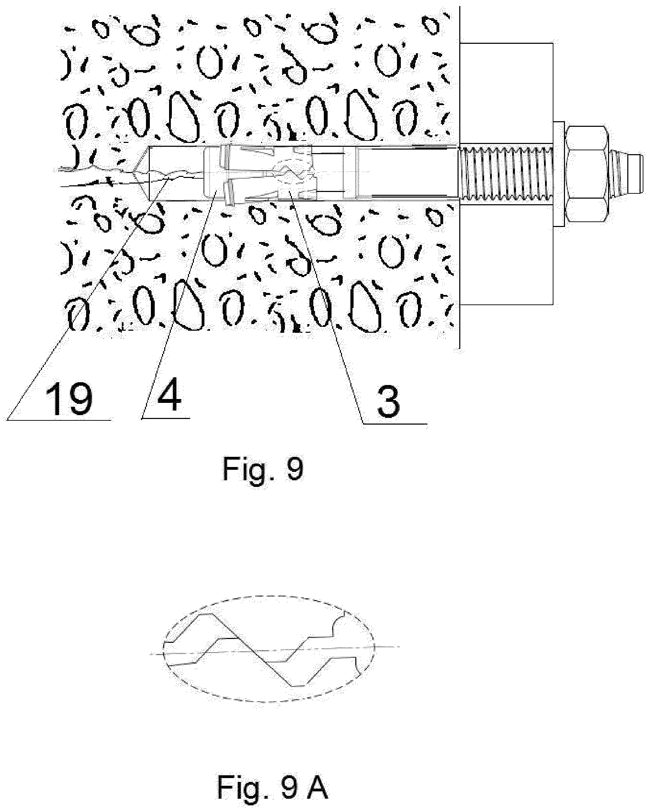

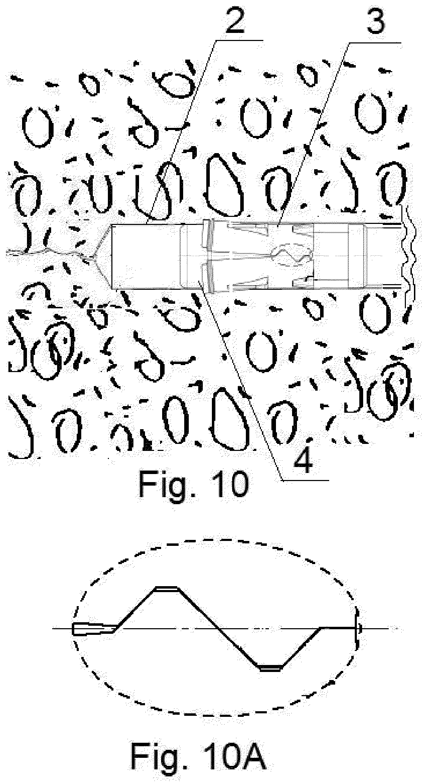

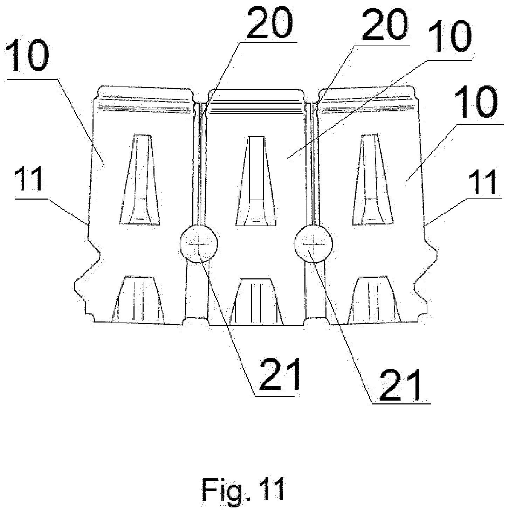

The expanding anchor according to the invention is explained more closely in the embodiments and in the drawings, in which fig. 1 presents the expanding anchor in a side view in an assembled state, but not fastened in a hole, fig. 2 presents the expanding anchor in a side view in an assembled state, but not fastened in a hole, fig. 3 presents the expanding anchor in a side view in an assembled state, but not fastened in a hole, fig. 4 presents the expanding anchor in a side view along with the fastened object once fastened in a hole in concrete without cracks, fig. 5 presents an expanding sleeve in a side view, mounted on the threaded bolt, but before being fastened in a hole, fig. 5A presents the detail of fig. 5, fig. 6 presents the expanding sleeve in a side view when the expanding anchor is fastened in a hole in concrete without cracks, fig. 7 presents the expanding anchor of fig. 1 fastened in a hole along with the fastened object, when the concrete has cracked in the hole and a longitudinal slot has formed, fig. 7A presents the detail of fig. 7, fig. 8 presents the expanding sleeve when the longitudinal slot of fig. 7 has been closed, fig. 8A presents the detail of fig. 8, whereas fig. 9 presents the expanding anchor fastened in a hole along with the fastened object, when the longitudinal slot of fig. 7 has expanded in one direction, fig. 9A presents the detail of fig. 9, whereas fig. 10 presents the expanding sleeve when the expanded longitudinal slot of fig. 9 has completely closed, whereas fig. 11 presents the lateral surface of the expanding sleeve in a top view.

The design and the operating principle of the expanding anchor according to the invention are presented in figures from 1 to 11. For anchoring the expanding anchor 1, a hole 2 is drilled with a diameter like the nominal diameter of the expanding anchor 1, and with a depth of slightly more than the length of the threaded bolt 7. Once the hole 2 has been drilled, it is cleaned of cuttings, and the expanding anchor 1 is introduced into the hole 2. Figures 1 to 3 present the assembled expanding anchor 1 prior to its insertion into the hole 2. The expanding anchor 1 is formed of the threaded bolt 7 ending with a cone 4, whose smaller diameter faces the threaded part. The bolt 7 has placed thereon an expanding sleeve 3 formed of expanding segments 10 divided by longitudinal slots 20 ending with openings 21, and one continuous longitudinal slot 12. The continuous longitudinal slot 12 from the side of the element 8 fastening the object 5 is formed by the edges 11 of the expanding segments 10 having an extension in the longitudinal axial and circumferential direction of the threaded bolt 7, this extension from the side of the threaded bolt 7 resembling a trapezium. Subsequently, in the longitudinal axial direction of the threaded bolt 7, the edges 11 turn into straight lines converging near the end of the expanding sleeve 3. The same arrangement of the edges 11 of the expanding segments 10 of the expanding sleeve 3 also occurs directly after the insertion of the expanding anchor 1 into the hole 2, but before tightening it, and therefore pressing against the object 5, which is to be fastened to the surface of concrete 6, and the expansion of the expanding sleeve 3 in the drilled hole 2. The fastening of the expanding anchor 1 and its anchoring in the drilled hole 2 proceed in the following manner. Once the expanding sleeve 3 has been put on the threaded bolt 7 from the side of the cone 4, and a washer 9 and the element 8 fastening the object 5 have been put on from the other side, the expanding anchor 1 is inserted into the drilled hole 2. When the expanding anchor 1 is moved to a proper positioning depth, the element 8, which is fastened by, e.g. a nut, can be tightened along with the object 5 which is to be fastened in this place by tightening the element 8 to a specific torque. This tightening causes the threaded bolt 7 to be pulled in an outward direction, while the fixed expanding sleeve 3 remaining in place expands radially because the cone 4 is being drawn in, by uniform spreading of the expanding segments 10 towards the sides, and it is pressed against the walls of the hole 2. Upon reaching a specific fastening torque, the expanding anchor 1 is sufficiently firmly seated, and the area of the expanding sleeve 3 comprises only a part of the cone 4, which means that the expanding segments 10 are only partially open. When expanding, the expanding sleeve 3 causes firm anchoring of the expanding anchor 1 in the hole 2, which is visible in fig. 4, which presents the expanding anchor 1 in a side view once fastened in a hole 2 drilled in concrete 6, in which there are no cracks. When expanding by drawing the cone 4 into the expanding sleeve 3, the expanding sleeve 3 anchors the expanding anchor 1 in the drilled hole 2 in a retaining manner. When the expanding sleeve 3 has expanded nonuniformly and slid onto the cone 4 incompletely, the edges 11 of the expanding segments 10 partially having an extension resembling a trapezium abut on each other so that there is no slot therebetween in the trapezium area, provided a condition is fulfilled that the lengths A1 and B1 of the parts of the edges 11 extending in the longitudinal axial direction of the threaded bolt 7 in the trapezium area are equal, i.e. A1 = B1, and the heights A2 and B2 of the trapezia formed by the edges 11 in the trapezium area of the expanding segments 10 are equal, i.e. A2 = B2, meaning that the edges 11 having an extension in the longitudinal axial and circumferential direction of the threaded bolt 7 converge. On the other hand, when the lengths A1 of the parts of the edges 11 extending in the longitudinal axial direction of the threaded bolt 7 in the trapezium area are shorter than the lengths B1 of the parts of the edges 11 extending in the longitudinal axial direction of the threaded bolt 7 in the trapezium area, i.e. A1 < B1, and the heights A2 of the trapezia formed by the edges 11 in the trapezium area of the expanding segments 10 are higher than the heights B2 of the trapezia formed by the edges 11 in the trapezium area of the expanding segments 10, i.e. A2 > B2, the edges 11 having an extension in the longitudinal axial direction of the threaded bolt 7 are moved away from each other to a certain distance, and they converge in the circumferential direction.

Sample values for both conditions are presented below:

| Number of example | A1 [mm] | B1 [mm] | A2 [mm] | B2 [mm] |
|---|---|---|---|---|
| 1 | 0.45 | 0.55 | 0.85 | 0.65 |
| 2 | 0.50 | 0.55 | 1 | 0.65 |
| 3 | 0.10 | 0.55 | 0.85 | 0.65 |

During the fastening of the expanding anchor 1, the expanding sleeve 3 expands by drawing the cone 4 thereinto, therefore anchoring the expanding anchor 1 in the drilled hole 2 in a retaining manner, as presented in figs. 4 and 6. During the fastening of the expanding anchor 1 in the hole 2 and its work, the edges 11 of the expanding segments 10 forming the continuous longitudinal slot 12 of the expanding sleeve 3 may form a slot 13 and/or a slot 14 in the shape of an inverted cone. As shown in fig. 4, the cone 4 being drawn into the expanding sleeve 3 causes the edges 11 of the expanding segments 10 to turn in the longitudinal axial direction of the threaded bolt 7 into straight lines, extending away from each other symmetrically towards the end of the expanding sleeve 3, and form a slot 14 in the shape of an inverted cone. As shown in figures 1-3, on the expanding sleeve 3 there are placed lugs 15, 17, 18, which protrude beyond its diameter. A lug in the form of an annular collar 15 is placed close to the edge 16 of the expanding sleeve 3 from the side of the cone 4, and it causes the expanding sleeve 3 to wedge during the anchoring step, also preventing it from sliding. The lugs 17, 18 have the form of individual elements, and they form a first row of lugs 17 with a height W, and a second row of lugs 18 with a height Z.

The height W of the lugs 17 is higher than the height Z of the lugs 18. This causes the lugs 17 to prevent the lugs 18 from being cut during the step of placing the expanding anchor 1 in the hole 2, and they also prevent the expanding sleeve 3 from sliding during the action of forces pulling out the expanding anchor 1. On the other hand, the lugs 18 prevent the expanding sleeve 3 from sliding during the fastening of the expanding anchor 1, when the fastening element 8 becomes tightened along with the object 5 by pressing against concrete 6, and they additionally assist in holding the expanding anchor 1 during the action of displacing forces, when an attempt is made to pull out the expanding anchor 1. The shape and distribution of the lugs 15, 17, 18 on the expanding sleeve 3 and the arrangement of the edges 11 result in asymmetry of the expanding sleeve 3 and its angularity, due to which the expanding anchor 1 is secured against displacements of the expanding sleeve 3 in the hole during the action of longitudinal forces. When there is a crack in concrete and a longitudinal slot 19 is formed in the concrete, the lugs 15, 17, 18 assist in the work of the edges 11 of the expanding segments 10 forming a "lock". When a crack in the form of a longitudinal slot 19 appears in the area of the hole 2, in which the expanding anchor 1 is anchored, the edges 11 forming the continuous longitudinal slot 12 of the expanding sleeve 3 will move with respect to each other independently, and in one place, where the edges 11 have a circumferential extension, they will wedge against each other, acting as a "lock", and in the longitudinal axial direction of the threaded bolt 7 near the end of the expanding sleeve 3 the edges 11 will move away from each other, causing the expanding segments 10 of the expanding sleeve 3 to expand more with no major resistance, forming a slot 14 in the shape of an inverted cone. Examples presenting the work of the expanding sleeve 3 once fastened, and when a crack has appeared in concrete in the hole and subsequently disappeared, are presented in figs. 7-10. Fig. 7 presents the expanding anchor of fig. 1 fastened in a hole, in which concrete has cracked and a longitudinal slot 19 has formed, whereas fig. 7A presents the detail of fig. 7. As seen in figs. 7 and 7A, when the concrete has cracked in the form of alongitudinal slot 19 in the axis of the threaded bolt 7, the edges 11 of the expanding segments 10 are moved with respect to each other, as shown in detail in figure 7A. When the expanding anchor 1 is working, the edges 11 forming the continuous longitudinal slot 12 of the expanding sleeve 3 (fig. 1) form a slot 14 in the shape of an inverted cone, and a slot 13 (figures 7 and 7A), when the lengths A1 of the parts of the edges 11 extending in the longitudinal axial direction of the threaded bolt 7 in the trapezium area are shorter than the lengths B1 of the parts of the edges 11 extending in the longitudinal axial direction of the threaded bolt 7 in the trapezium area, i.e. A1 < B1, and the heights A2 of the trapezia formed by the edges 11 in the trapezium area of the expanding segments 10 are higher than the heights B2 of the trapezia formed by the edges 11 in the trapezium area of the expanding segments 10, i.e. A2 > B2. If a condition is fulfilled that the lengths A1 and B1 of the parts of the edges 11 extending in the longitudinal axial direction of the threaded bolt 7 in the trapezium area are equal, i.e. A1 = B1, and the heights A2 and B2 of the trapezia formed by the edges 11 in the trapezium area of the expanding segments 10 are equal, i.e. A2 = B2, then the edges 11 having an extension in the longitudinal axial and circumferential direction of the threaded bolt 7 converge in an area resembling a trapezium, and they form a slot 14 in the shape of an inverted cone. Fig. 8 presents the expanding anchor of fig. 7, when the longitudinal slot 19 has completely closed, whereas fig. 8A presents the detail of fig. 8, where the edges 11 of the expanding segments 10 are moved with respect to each other to the initial setting, meaning a parallel arrangement of the edges 11 in the area of the "lock". Fig. 9 presents the expanding anchor of fig. 7 fastened in a hole, when the longitudinal slot 19 has expanded in one direction, whereas fig. 9A presents the detail of fig. 9. As seen in fig. 9A, the edges 11 of the expanding segments 10 are moved with respect to each other independently, and in one place, where the edges 11 have a circumferential extension, they wedge against each other, acting as a "lock", and in the longitudinal axial direction of the threaded bolt 7, where the edges 11 converged near the end of the expanding sleeve 3, they are moved away from each other, causing the expanding segments 10 of the expanding sleeve 3 to be expanded more with no major resistance, independently from each other. Fig. 10 presents the expanding anchor of fig. 9 when the expanded longitudinal slot 19 has completely closed, and similarly to fig. 8, where the edges 11 of the expanding segments 10 have moved with respect to each other to the initial setting, meaning a parallel arrangement of the edges 11 in the area of the "lock". Fig. 11 presents in a top view the lateral surface of the expanding sleeve 3 provided with longitudinal slots 20 which enable its expansion when it is being pressed against the cone 4, the longitudinal slots 20 ending with openings 21 preventing rupture of the expanding sleeve 3 during its expansion. Due to the ability to move the expanding sleeve 3 or parts thereof in the form of expanding segments 10 in a radial direction, it has become possible to further slide the cone 4 longitudinally, until reaching the state of maximum expansion.

## Claims

1. An expanding anchor for fastening in a hole drilled in concrete, formed of a threaded bolt ending with a cone whose smaller diameter is facing the threaded part, the bolt having placed thereon an expanding sleeve formed of expanding segments divided by longitudinal slots and provided with lugs, which protrude beyond the diameter of the expanding sleeve, wherein an element fastening an object is seated on the threaded part of the bolt, **characterised in that** one continuous longitudinal slot (12) of the expanding sleeve (3) is formed from the side of the element (8) fastening the object (5), by the edges (11) of the expanding segments (10), the edges (11) having an extension in a longitudinal axial and circumferential direction of the threaded bolt (7), which extension resembles a trapezium, and subsequently, the edges (11) in the longitudinal axial direction of the threaded bolt (7) turn into straight lines converging near the end of the expanding sleeve (3), and the length h of the edges (11) from the base of the expanding sleeve (3) from the side of the element (8) fastening the object (5) to the end of the trapezium part <= half of the length H of the expanding sleeve (3), whereas the ratio of the lengths A1 and B1 of the parts of the edges (11) extending in the longitudinal axial direction of the threaded bolt (7) in the trapezium part is A1 <= B1, and the ratio of the heights A2 and B2 of the trapezia formed by the edges (11) in the trapezium part of the expanding sleeve (3) is A2 >= B2, whereas on the circumference of the expanding sleeve (3) there are distributed lugs, which have the form of individual elements (17, 18) situated in two rows, and of an annular collar (15), while additional longitudinal slots (20) end with openings (21) which divide the expanding sleeve (3) into separate expanding segments (10).

2. The expanding anchor of claim 1, **characterised in that** a lug in the form of an annular collar (15) is placed near the edge (16) of the expanding sleeve (3), from the side of the cone (4).

3. The expanding anchor of claim 1, **characterised in that** lugs having the form of individual elements (17) and forming a first row are distributed on the circumference of the expanding sleeve (3) and situated behind the lug in the form of an annular collar (15).

4. The expanding anchor of claim 1, **characterised in that** lugs having the form of individual elements (18) and forming a second row are distributed on the circumference of the expanding sleeve (3) and situated near the edge (16) of the expanding sleeve (3) from the side of the element (8) fastening the object (5).

5. The expanding anchor of claim 1, **characterised in that** the lugs (17) forming the first row have a height W higher than the height Z of the lugs (18) forming the second row.

## Patentansprüche

1. Ein Spreizanker zur Befestigung in einem in Beton gebohrten Loch, bestehend aus einem Gewindebolzen, der in einem Konus endet, dessen kleinerer Durchmesser zum Gewindeteil hin ausgerichtet ist, wobei auf den Bolzen eine Spreizhülse aufgesetzt ist, die aus Spreizsegmenten besteht, welche durch Längsschlitze unterteilt und mit Vorsprüngen versehen sind, die über den Durchmesser der Spreizhülse hinausragen, wobei ein Element zur Befestigung eines Gegenstands auf dem Gewindeteil des Bolzens sitzt, **dadurch gekennzeichnet, dass** ein durchgehender Längsschlitz (12) der Spreizhülse (3) von der Seite des Elements (8) zur Befestigung des Gegenstands (5) aus durch die Kanten (11) der Spreizsegmente (10) gebildet wird, wobei die Kanten (11) eine Ausdehnung in eine axiale Längs- und Umfangsrichtung des Gewindebolzens (7) aufweisen, die einem Trapez ähnelt, und anschließend die Kanten (11) in der axialen Längsrichtung des Gewindebolzens (7) in gerade Linien übergehen, die nahe dem Ende der Spreizhülse (3) zusammenlaufen, und die Länge h der Kanten (11) von der Basis der Spreizhülse (3) von der Seite des Elements (8), das das Objekt (5) befestigt, bis zum Ende des Trapezabschnitts <= der Hälfte der Länge H der Spreizhülse (3) beträgt, während das Verhältnis der Längen A1 und B1 der Teile der Kanten (11), die sich in der axialenLängsrichtung des Gewindebolzens (7) im Trapezteil erstrecken, A1 <= B1 ist, und das Verhältnis der Höhen A2 und B2 der durch die Kanten (11) im Trapezteil der Spreizhülse (3) gebildeten Trapeze A2 >= B2 ist, während auf dem Umfang der Spreizhülse (3) Vorsprünge verteilt sind, die die Form einzelner Elemente (17, 18) haben, die in zwei Reihen angeordnet sind, und die Form eines ringförmigen Kragens (15) haben, während zusätzliche Längsschlitze (20) mit Öffnungen (21) enden, die die Spreizhülse (3) in separate Spreizsegmente (10) unterteilen.

2. Der Spreizanker nach Anspruch 1, **dadurch gekennzeichnet, dass** ein Vorsprung in Form eines ringförmigen Kragens (15) nahe des Randes (16) der Spreizhülse (3) auf der Seite des Konus (4) angeordnet ist.

3. Der Spreizanker nach Anspruch 1, **dadurch gekennzeichnet, dass** Vorsprünge, die die Form einzelner Elemente (17) haben und eine erste Reihe bilden, auf dem Umfang der Spreizhülse (3) verteilt sind und sich hinter dem Vorsprung in der Form eines ringförmigen Kragens (15) befinden.

4. Der Spreizanker nach Anspruch 1, **dadurch gekennzeichnet, dass** Vorsprünge, die die Form einzelner Elemente (18) haben und eine zweite Reihe bilden, auf dem Umfang der Spreizhülse (3) verteilt sind und sich nahe dem Rand (16) der Spreizhülse (3) auf der Seite des Elements (8) befinden, das das Objekt (5) befestigt.

5. Der Spreizanker nach Anspruch 1, **dadurch gekennzeichnet, dass** die die erste Reihe bildenden Vorsprünge (17) eine Höhe W aufweisen, die größer ist als die Höhe Z der die zweite Reihe bildenden Vorsprünge (18).

## Revendications

1. Ancre expansible pour fixation dans un trou foré dans du béton, formée d'un boulon fileté se terminant par un cône dont le diamètre le plus petit est tourné vers la partie filetée, le boulon ayant un manchon expansible placé dessus formé de segments expansibles divisés par des fentes longitudinales et pourvus d'ergots, qui font saillie au-delà du diamètre du manchon expansible, où un élément fixant un objet est posé sur la partie filetée du boulon, **caractérisée en ce qu'**une fente longitudinale continue (12) du manchon expansible (3) est formée du côté de l'élément (8) fixant l'objet (5), par les bords (11) des segments expansibles (10), les bords (11) ayant une extension dans une direction axiale longitudinale et circonférentielle du boulon fileté (7), laquelle extension ressemble à un trapèze, et ensuite, les bords (11) dans la direction axiale longitudinale du boulon fileté (7) se transforment en lignes droites convergeant près de l'extrémité du manchon expansible (3), et la longueur h des bords (11) depuis la base du manchon expansible (3) du côté de l'élément (8) fixant l'objet (5) jusqu'à l'extrémité de la partie trapézoïdale <= la moitié de la longueur H du manchon expansible (3), tandis que le rapport entre les longueurs A1 et B1 des parties des bords (11) s'étendant dans la direction axiale longitudinale du boulon fileté (7) dans la partie trapézoïdale est A1 <= B1, et le rapport entre les hauteurs A2 et B2 des trapèzes formés par les bords (11) dans la partie trapézoïdale du manchon expansible (3) est A2 >= B2, tandis que sur la circonférence du manchon expansible (3) sont répartis des ergots, qui ont la forme d'éléments individuels (17, 18) situés en deux rangées, et de collier annulaire (15), alors que des fentes longitudinales supplémentaires (20) se terminent par des ouvertures (21) qui divisent le manchon expansible (3) en segments expansibles séparés (10).

2. Ancre expansible de la revendication 1, **caractérisée en ce qu'**un ergot en forme de collier annulaire (15) est placé près du bord (16) du manchon expansible (3), du côté du cône (4).

3. Ancre expansible de la revendication 1, **caractérisée en ce que** des ergots ayant la forme d'éléments individuels (17) et formant une première rangée sont répartis sur la circonférence du manchon expansible (3) et situés derrière l'ergot en forme de collier annulaire (15).

4. Ancre expansible de la revendication 1, **caractérisée en ce que** des ergots ayant la forme d'éléments individuels (18) et formant une seconde rangée sont répartis sur la circonférence du manchon expansible (3) et situés près du bord (16) du manchon expansible (3) du côté de l'élément (8) fixant l'objet (5).

5. Ancre expansible de la revendication 1, **caractérisée en ce que** les ergots (17) formant la première rangée ont une hauteur W supérieure à la hauteur Z des ergots (18) formant la seconde rangée.
